# EUROPEAN PATENT APPLICATION

(11) **EP 1 594 254 A1**
(43) Date of publication of application: **09.11.2005**
(21) Application number: 05009852.4
(22) Date of filing: 04.05.2005
(51) Int. Cl.: H04L 12/18

(54) **Apparatus and method for notifying transmisssion mode in MBMS service**

(30) Priority: 07.05.2004 KR 2004032361
(71) Applicant: SAMSUNG ELECTRONICS CO., LTD., Suwon-city, Gyeonggi-do (KR)
(72) Inventor: Kim, Eun-Jung Samsung Electronics Co., Ltd., Suwon-si Gyeonggi-do (KR); Van Lieshout, Gert Jan Samsung Electronics Co. Ltd, Suwon-si Gyeonggi-do (KR); Lee, Kook-Heul Samsung Electronics Co., Ltd., Suwon-si Gyeonggi-do (KR); Choi, Sung-Ho Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

An apparatus in a mobile communication system for providing a multimedia broadcast/multicast service (MBMS) and a method for giving notification of an MBMS service while considering transmission mode are provided. A controlling radio network controller (CRNC) sends, to a serving radio network controller (SRNC), transmission mode information indicating point-to-point (PTP), point-to-multipoint (PTM), or "Not provide" cell by cell. The SRNC determines service notification on the basis of the transmission mode information. The CRNC minimizes a signaling load on an Iur interface when sending, to the SRNC, the transmission mode information suitable for each cell.

## Description

### BACKGROUND OF THE INVENTION

### Field of the Invention:

The present invention relates generally to a mobile communication system for providing a multimedia broadcast/multicast service (MBMS), and more particularly to a method for providing an MBMS service.

### Description of the Related Art;

With the development of communication technology, mobile communication systems are developing into systems for providing a packet service communication function capable of transmitting high-volume data such as packet data, circuit data, and so on and a multimedia broadcasting/communication function capable of providing multimedia services as well as voice services. To support multimedia broadcasting/communication, a multimedia broadcast/multicast service (MBMS) for providing service content from one or more multimedia data sources to a plurality of user equipments (UEs) is being discussed.

The term "MBMS" indicates services for transmitting identical multimedia data to a plurality of receivers through a radio network. In this case, because the receivers share one radio channel, radio transmission resources can be used more efficiently. An MBMS service can support a transmission mode for transmitting multimedia data such as real-time video and voice, still images, text, and so on and can simultaneously provide voice data and video data. Moreover, the MBMS service requires a large amount of transmission resources. Because the MBMS service must transmit the identical multimedia data to multiple cells in which users arc located, a point-to-point (PTP) or point-to-multipoint (PTM) connection is performed according to the number of users located in each cell. The PTP scheme provides a desired MBMS UE by UE, and allocates a dedicated service channel to each UE. On the other hand, the PTM scheme allocates a common channel to UEs requesting the same MBMS such that the requested MBMS can be provided. That is, the PTM scheme of the MBMS allocates the common channel service by service, and provides a corresponding service through the common channel.

The present invention will be described with reference to a third generation mobile communication network based on the standardization of the Third Generation Project Partnership (3GPP). Of course, the present invention can be applied to other mobile communication networks using the MBMS.

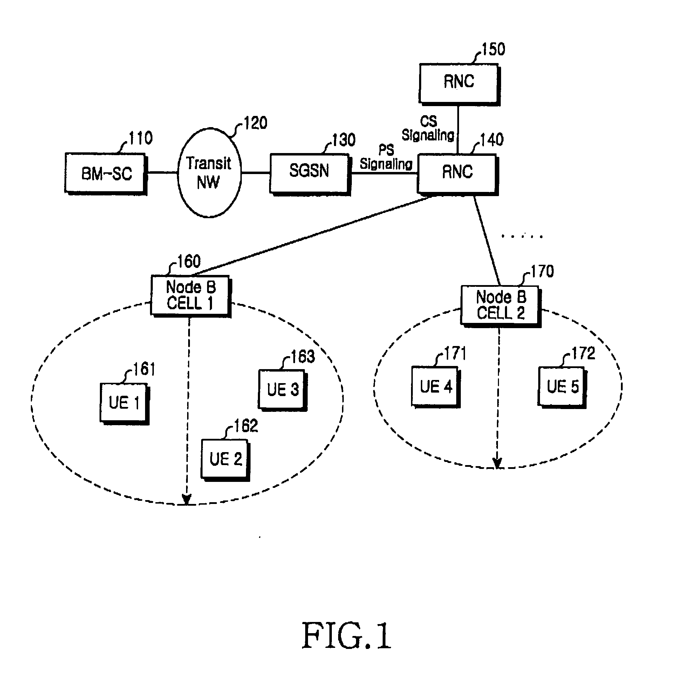

Nodes participating in providing an MBMS service in a mobile communication network are roughly illustrated in FIG. 1.

Referring to FIG. 1, UEs 161, 162, 163, 171, and 172 are terminals or subscribers capable of receiving MBMS service. Multiple UEs can be located within one cell. Base stations for transmitting MBMS data by radio, i.e., Node Bs, cover CELL-1 160 and CELL-2 170. For convenience of explanation, it is assumed that one Node B covers one cell. A radio network controller (RNC) 140 covers cells 160 and 170, selectively transmits multimedia data to a specific cell, and controls a radio channel established to provide the MBMS service. A connection between the RNC 140 and the UEs 161 to 172 is referred to as a radio resource control (RRC) interface. The RNC 140 accesses a packet switched or packet service (PS) network such as the Internet by using a serving general packet radio service (GPRS) support node (SGSN) 130.

The RNC is classified as a serving RNC (SRNC), a drift RNC (DRNC), or a controlling RNC (CRNC) according to its role. The SRNC manages information of each UE, and is responsible for communicating data with the SGSN 130. When data of the UE is transmitted to and received from the SRNC through a different RNC rather than the SRNC, the different RNC serves as the DRNC. The CRNC controls the UE.

A communication function between the RNC 140 and the PS network is performed by packet switched (PS) signaling. A connection between the RNC 140 and the SGSN 130 is referred to as an Iu-PS interface. The SGSN 130 controls an MBMS service for subscribers. For example, the SGSN 130 is responsible for managing service billing data of each subscriber, and is responsible for selectively transmitting multimedia data to a specific RNC 140.

A transit network (NW) 120 provides a communication path between a broadcast/multicast service center (BM-SC) 110 and the SGSN 130, and may be connected to an external network through a gateway GPRS support node (GGSN) (not shown). The BM-SC 110 serving as a MBMS data source is responsible for scheduling MBMS data.

The RNC 140 is connected to a circuit switched (CS) network by a mobile switching center (MSC) 150. The CS network is the legacy connection-based communication network for voice communication. A communication function between the RNC 140 and the MSC 150 is performed by CS signaling. A connection between the RNC 140 and the MSC 150 is referred to as an Iu-CS interface. An MBMS data stream is transferred to the UEs 161 to 172 through the transit NW 120, the SGSN 130, the RNC 140, and the Node Bs or cells 160 and 170.

In relation to one MBMS service, a plurality of RNCs can be provided for one or more SGSNs. In this case, each SGSN selectively transmits data to the RNC 140, and each RNC selectively transmits data to each of the cells. Accordingly, a list of nodes to receive a data stream is stored, such that MBMS data can be selectively transmitted only to the nodes included in the stored list. That is, the SGSN stores a list of RNCs, and the RNC stores a list of cells.

An operation for providing an MBMS service between a user and a network will now be described.

To provide the MBMS service, basic information associated with a corresponding service, e.g., an MBMS service identifier (ID), service initiation time, and service duration time, needs to be transferred to the UE. This process is referred to as a service announcement process.

If the UE desires to receive a specific service upon receiving the basic information associated with the specific service through the service announcement process, it sends a service request to high-level network nodes. This process is referred to as a service joining process. The service joining process includes a service ID, received through the service announcement process, in a message, and transfers the message to the BM-SC. Entities located between the BM-SC and the UE, i.e., the SGSN, the GGSN, and the like can identify UEs desiring to receive the MBMS service and areas in which the UEs are located. For example, the SGSN can identify a list of UEs and a list of RNCs associated with the UEs through the service joining process. The SGSN will transmit MBMS data only to an RNC associated with the UEs.

When the SRNC of the UE is different from the RNC covering a cell in which the UE is located after the UE joins the MBMS service, the CRNC is the DRNC of the UE. The SRNC transmits an MBMS service list associated with the UE service request to the DRNC. This process is referred to as an MBMS attach process. The DRNC generates an MBMS service context using the above-mentioned information, and is registered as an RNC that must transmit an MBMS-related message to the SGSN. This process is referred to as an MBMS registration process.

Through a session start procedure, the BM-SC reports the fact that the MBMS data will soon be transmitted, to the UEs registered for the MBMS service and the network entities associated with the UEs. The BM-SC transfers information associated with quality of service (QoS) and an MBMS service area.

To transfer MBMS data from the MB-SC to the UEs through a resource allocation process, data bearers are established between network entities, radio resources are allocated, and related information is reported to relative entities. In this step, the RNC can set the transmission mode to PTM or PTP on the basis of information indicating the number of UEs belonging to each cell and a radio resource management function. When the transmission mode is PTP, the SRNC is responsible for allocating resources to transmit MBMS data UE by UE. That is, the SRNC transmits a radio bearer (RB) SETUP message to each UE, subscribed to the MBMS, through a dedicated control channel (DCCH), and establishes RBs for transmitting the MBMS data, i.e., a transport channel and a physical channel. However, when the transmission mode is PTM, the CRNC is responsible for allocating resources to transmit MBMS data cell by cell. That is, the CRNC transmits an MBMS RB INFORMATION message to UEs through an MBMS control channel (MCCH), and establishes RBs for transmitting MBMS data, i.e., a transport channel and a physical channel.

When an MBMS CONTROL message is sent through the MCCH as in the MBMS RB INFORMATION message, the CRNC must first page a UE through a MBMS notification indicator channel (MICH). The UE docs not consecutively receive the MCCH, but receives the MCCH only for a predetermined time through the paging such that unnecessary battery power consumption can be avoided after the UE joins the MBMS service.

However, if UE capability is low when the UE has a dedicated channel (DCH) or is in a CELL-DCH state, the UE is incapable of receiving the MICH, and thus cannot determine that an MBMS service has been started in the PTM transmission mode. That is, if the UE is not notified that the MBMS service has been started even when the UE receives a CS/PS dedicated service. The MBMS service requirement is not satisfied. To satisfy the MBMS service requirement, the SRNC provides an MBMS DEDICATED NOTIFICATION message to the UE in the CELL_DCH state through the DCCH. In this case, the MBMS DEDICATED NOTIFICATION message includes a MBMS service ID and transmission mode information, and is used to page the UE.

When the SRNC of the UE is different from the CRNC for covering a cell in which the UE is located, the CRNC must notify the SRNC of the transmission mode determined cell by cell after the session is started. This process is referred to as a MBMS channel type reconfiguration process.

The transmission mode is classified as PTP or PTM. However, when a corresponding cell does not belong to a MBMS service area, or a MBMS service is not provided because of the lack of radio resources of a cell, there is no method for indicating that a MBMS service is unable to be provided. In this case, despite the fact that a MBMS service is unable to be provided, the SRNC provides normal service notification to a corresponding UE. Upon receiving the service notification, the UE interrupts an ongoing service to receive an unavailable service.

Accordingly, a need exists for a method by which the CRNC transmits information of the transmission mode suitable for each cell to the SRNC, and the SRNC determines service notification ou the basis of the transmission mode information.

### SUMMARY OF THE INVENTION

It is, therefore, an aspect of the present invention to provide a paging method for providing a multimedia broadcast/multicast service (MBMS).

It is another aspect of the present invention to provide a method that can suitably page a user equipment (UE) according to a transmission mode for multimedia broadcast/multicast service (MBMS) data when performing paging in a mobile communication system for providing an MBMS service.

It is another aspect of the present invention to provide a method for determining a transmission mode for transmitting multimedia broadcast/multicast service (MBMS) data in a drift radio network controller (DRNC) and efficiently transmitting information of the determined transmission mode from the DRNC to a serving radio network controller (SRNC), when paging a user equipment (UE) according to the transmission mode for the MBMS data.

It is yet another aspect of the present invention to provide a method for determining a transmission mode for a user equipment (UE) in a serving radio network controller (SRNC) by using information of the transmission mode determined cell by cell and received from a drift radio network controller (DRNC), when paging the UE according to the transmission mode for the MBMS data.

The above and other aspects of the present invention can be achieved by a paging apparatus and method for providing a multimedia broadcast/multicast service (MBMS) in a mobile communication system. The apparatus and method comprises a first radio network controller (RNC) for providing the MBMS to one or more user equipments (UEs) located in a plurality of cells, and a second RNC for covering the cells. The paging apparatus and method comprises determining transmission mode information indicating MBMS provisioning cell by cell in the second RNC, and sending a message including the determined transmission mode information to the first RNC; and sending a notification message comprising the transmission mode information from the first RNC to the one or more UEs located in the cells through a dedicated physical channel.

### BRIEF DESCRIPTION OF THE DRAWINGS

The above and other aspects and advantages of the present invention will be more clearly understood from the following detailed description taken in conjunction with the accompanying drawings, in which:
FIG. 1 illustrates a network architecture for providing a multimedia broadcast/multicast service (MBMS);
FIG. 2 is a flow chart illustrating operation of a drift radio network controller (DRNC) in accordance with an embodiment of the present invention; and
FIG. 3 is a flow chart illustrating operation of a serving radio network controller (SRNC) in accordance with an embodiment of the present invention.
Throughout the drawings, the same element is designated by the same reference numeral or character.

### DETAILED DESCRIPTION OF EXEMPLARY EMBODIMENTS

Embodiments of the present invention will be described in detail herein below with reference to the accompanying drawings.

The embodiments of the present invention are disclosed for illustrative purposes only.

In the following description, a detailed description of known functions and configurations incorporated herein will be omitted for conciseness.

After registration for a multimedia broadcast/multicast service (MBMS), a radio network controller (RNC) receives, from a core network (CN), quality of service (QoS) information comprising MBMS data and MBMS service area information through a session start procedure, and determines a transmission mode, i.e., a channel type, for transmitting MBMS data cell by cell. In this case, the number of user equipments (UEs), joining an MBMS service, located in cells belonging to the MBMS service area and radio resource states of the cells must be taken into account

In accordance with embodiments of the present invention, the transmission mode is divided into three types: point-to-point (PTP), point-to-multipoint (PTM), and "Not Provide".

PTP indicates that a serving RNC (SRNC) allocates a dedicated channel (DCH) UE by UE such that MBMS data can be transmitted.

PTM indicates that a controlling RNC (CRNC) allocates a forward acccss channel (FACH) serving as a common channel cell by cell such that MBMS data can be transmitted.

"Not Provide" indicates that an MBMS service is not supported through a cell when a radio resource is not allocated to transmit MBMS data because the cell does not belong to a MBMS service area, or cell resources have been exhausted.

When an SRNC of the UE is different from an RNC for covering a cell in which the UE is located, the RNC is a CRNC and a drift RNC (DRNC). After the DRNC determines the transmission mode for a cell-by-cell MBMS service, it notifies the SRNC of the determined transmission mode through an MBMS CHANNEL TYPE RECONFIGURATION INDICATION message. The MBMS CHANNEL TYPE RECONFIGURATION INDICATION message is transmitted using the following signaling bearers on an Iur interface between the RNCs.
1) Connectionless signaling bearer
2) Dedicated connection oriented signaling bearer established for one MBMS service context between two RNCs
3) Connection oriented signaling bearer established for all MBMS services between two RNCs

In accordance with the present invention, the MBMS CHANNEL TYPE RECONFIGURATION INDICATION message comprise the following information elements:
(1) MBMS service identifier (ID)
(2) Cell ID
(3) Transmission mode information

The present invention provides the following three embodiments for sending the transmission mode information from the DRNC to the SRNC.

### First Embodiment

When the transmission mode of a corresponding cell is set to PTP, the DRNC sends a MBMS CHANNEL TYPE RECONFIGURATION INDICATION message (indicating Transmission Mode = PTP).

When the transmission mode of a corresponding cell is set to PTM, the DRNC sends an MBMS CHANNEL TYPE RECONFIGURATION INDICATION message (indicating Transmission Mode - PTM).

When the transmission mode of a corresponding cell is set to "Not Provide", the DRNC sends an MBMS CHANNEL TYPE RECONFIGURATION INDICATION message (indicating Transmission Mode = Not Provide).

Upon receiving the MBMS CHANNEL TYPE RECONFIGURATION INDICATION message, the SRNC identifies transmission mode information included in the message, and determines the transmission mode information of a corresponding cell as one of PTP, PTM, and "Not Provide".

Because the DRNC notifies the SRNC of the transmission mode of a current cell, the SRNC efficiently provides the UE with an MBMS service.

### Second Embodiment

When the transmission mode of a corresponding cell is set to PTP, the DRNC sends an MBMS CHANNEL TYPE RECONFIGURATION INDICATION message (indicating Transmission Mode - PTP).

When the transmission mode of a corresponding cell is set to PTM, the DRNC sends an MBMS CHANNEL TYPE RECONFIGURATION INDICATION message (indicating Transmission Mode = PTM).

When the transmission mode of a corresponding cell is set to "Not Provide", the DRNC does not send an MBMS CHANNEL TYPE RECONFIGURATION INDICATION message.

Upon receiving the MBMS CHANNEL TYPE RECONFIGURATION INDICATION message, the SRNC identifies transmission mode information included in the message, and determines the transmission mode of a corresponding cell as a PTP or PTM. However, when the SRNC does not receive the MBMS CHANNEL TYPE RECONFIGURATION INDICATION message from the DRNC performing a MBMS attach process, it implicitly determines the transmission mode of a corresponding cell as "Not Provide".

When the transmission mode information is "Not Provide" in accordance with the second embodiment, the DRNC can reduce a signaling load on the Iur interface because it does not send an MBMS CHANNEL TYPE RECONFIGURATION INDICATION message.

### Third Embodiment

When the transmission mode of a corresponding cell is set to PTP, the DRNC sends an MBMS CHANNEL TYPE RECONFIGURATION INDICATION message (indicating Transmission Mode = PTP).

When the transmission mode of a corresponding cell is set to PTM, the DRNC does not send an MBMS CHANNEL TYPE RECONFIGURATION INDICATION message.

When the transmission mode of a corresponding cell is set to "Not Provide", the DRNC sends an MBMS CHANNEL TYPE RECONFIGURATION INDICATION message (indicating Transmission Mode = Not Provide).

Upon receiving the MBMS CHANNEL TYPE RECONFIGURATION INDICATION message, the SRNC identifies transmission mode information included in the message, and determines the transmission mode of a corresponding cell as PTP or "Not Provide".

When the transmission mode is PTM in accordance with the third embodiment, the DRNC can reduce a signaling load on the lur interface because it docs not send an MBMS CHANNEL TYPE RECONFIGURATION INDICATION message.

Operation of the SRNC according to each transmission mode in an embodiment of the present invention will be described. While a soft handover is ongoing, the UE detects a plurality of radio links from a plurality of cells belonging to an active set. In this case, the SRNC receives an MBMS CHANNEL TYPE RECONFIGURATION INDICATION message from at least one DRNC relating to the plurality of radio links, identifies transmission modes of all the cells belonging to the active set, and finally determines the transmission mode for the UE. In this case, because the SRNC determines the transmission mode for the UE while taking into account the transmission modes of all the cells belonging to the active set, the transmission mode for the UE determined by the SRNC may be different from the transmission mode of each cell set by a corresponding DRNC.

A1. When the transmission mode for the UE is PTP, the SRNC sends an MBMS DEDICATED NOTIFICATION message to notify the UE that MBMS data transmission has been started through a dedicated control channel (DCCH) on the basis of the PTP transmission mode. In an alternative method, radio resources for MBMS data reception may be allocated to the UE through a radio bearer (RB) SETUP radio resource control (RRC) message without sending a NOTIFICATION message.

A2. When the transmission mode for the UE is PTM, the SRNC sends an MBMS DEDICATED NOTIFICATION message to notify the UE that MBMS data transmission has been started through the DCCH on the basis of the PTM transmission mode.

A3. When the transmission mode for the UE is "Not Provide", the SRNC sends an MBMS DEDICATED NOTIFICATION message to notify the UE that MBMS data transmission has been started through the DCCH, but a service is unable to be provided from a cell in which the UE is located. In an alternative method, a NOTIFICATION message may not be transmitted.

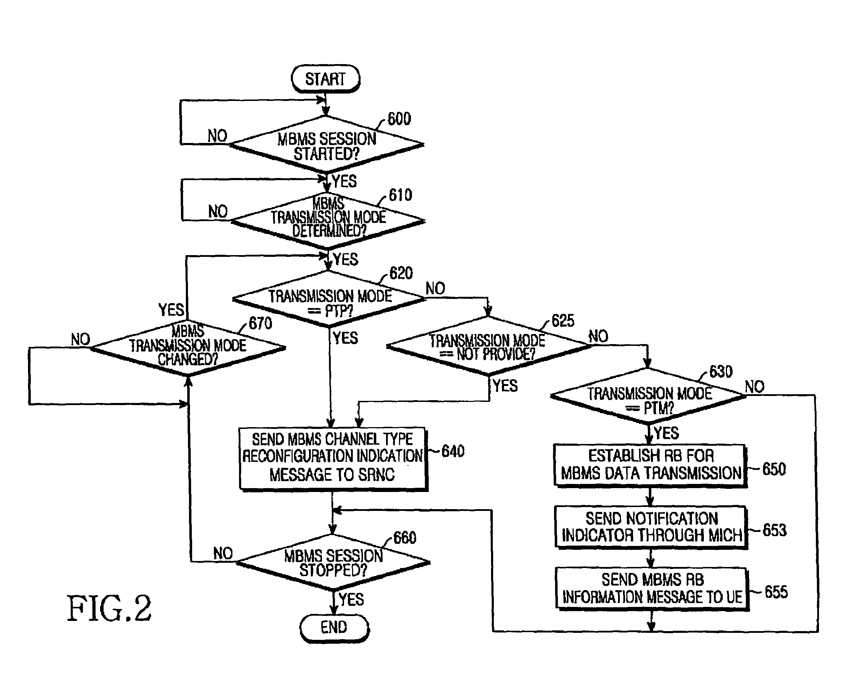

FIG. 2 is a flow chart illustrating operation of the DRNC in accordance with an embodiment of the present invention. The operation of the DRNC is based on the third embodiment.

Referring to FIG. 2, the DRNC receives a SESSION START message for an MBMS service that the UE has joined, and determines that a MBMS session has been started in step 600. The DRNC determines the transmission mode for MBMS data transmission in step 610. The DRNC determines whether the transmission mode for MBMS data transmission is PTP in step 620 or not provide in step 625. When the determined transmission mode is PTP or "Not Provide", the DRNC sends, to the SRNC, an MBMS CHANNEL TYPE RECONFIGURATION INDICATION message in which transmission mode information (indicating PTP or "Not Provide'') has been set in step 640, and proceeds to step 660.

However, when the transmission mode determined in step 610 is determined to be a PTM in step 630, the DRNC proceeds to step 650. In step 650, the DRNC establishes a radio resource for MBMS data transmission to a cell for which the PTM transmission mode has been set, i.e., a PTM RB, and proceeds to step 653. In step 653, the DRNC sends, through an MBMS notification indicator channel (MICH), a notification indicator indicating that a CONTROL message will be sent to the MCCH, and proceeds to step 655. In step 655, the DRNC sends, through an MBMS RB INFORMATION message, configuration information of the radio resource established in step 650, and proceeds to step 660.

In step 660, the DRNC receives a SESSION STOP message from a Core Network (CN), determines that an MBMS session has been stopped, and stops the MBMS session. However, when the MBMS session is ongoing, the DRNC proceeds to step 670.

In step 670, the DRNC determines if the transmission mode determined in step 610 has changed. When the number of UEs joining the MBMS service exceeds a threshold value for determining the PTM transmission mode or the radio resource of the cell bas been changed, the transmission mode may be changed When the transmission mode is changed, the DRNC returns to step 620.

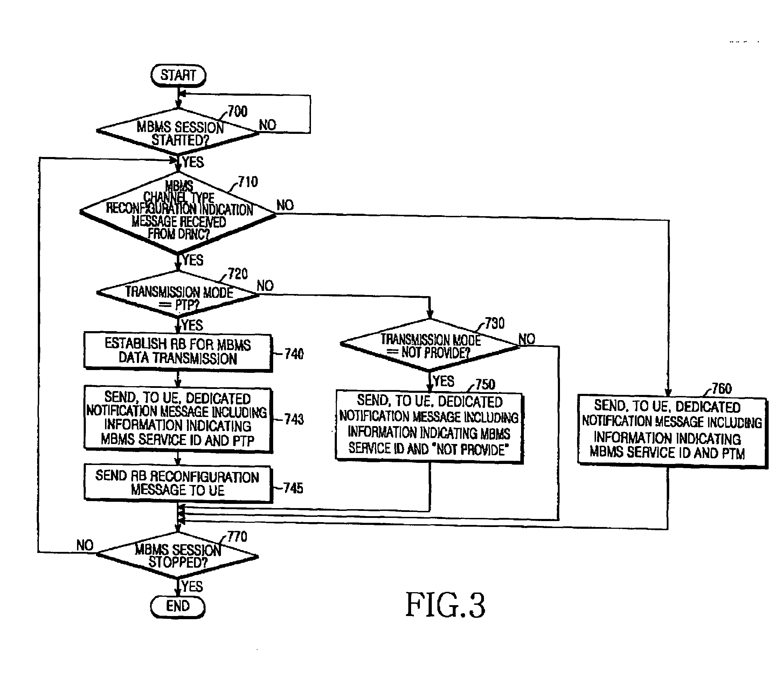

FIG. 3 is a flow chart illustrating operation of the SRNC in accordance with an embodiment of the present invention. The operation of the SRNC is based on the third embodiment

Referring to FIG. 3, the SRNC receives, from the CN, a SESSION START message for a MBMS service that the UE has joined, and determines that a MBMS session has been started in step 700. In step 710, the SRNC determines if a MBMS CHANNEL TYPE RECONFIGURATION INDICATION message has been received from the DRNC. Upon receiving the message, the SRNC determines if the transmission mode information included in the MBMS CHANNEL TYPE RECONFIGURATION INDICATION message is a PTP in step 720. If the transmission mode information included in the message is PTP, the SRNC proceeds to step 740. However, if the transmission mode information included in the message is not PTP, a determination is made as to whether the transmission mode information is "Not Provide" in step 730. If the transmission mode information is "Not Provide", the SRNC proceeds to step 750.

In step 740, the SRNC establishes radio resources for transmitting MBMS data UE by UE, and proceeds to step 743. In step 743, the SRNC sends, through the DCCH, a MBMS DEDICATED NOTIFICATION message to notify the UEs that MBMS data transmission has been started in the PTP transmission mode. The MBMS DEDICATED NOTIFICATION message includes a MBMS service ID and transmission mode information (indicating PTP), and is used for dedicated paging for the UE. In step 745, the SRNC sends, through an RB RECONFIGURATION message of the DCCH, configuration information of the radio resources established in step 740. In step 770, the SRNC receives a SESSION STOP message. When the SRNC determines that the MBMS session has been stopped, the operation of the SRNC is stopped. However, when the MBMS session is not stopped, the SRNC returns to step 710.

In step 750, the SRNC sends an MBMS DEDICATED NOTIFICATION message to notify the UE that MBMS data transmission has been started through the DCCH, but service is unable to be provided from a cell in which the UE is located. Then, the SRNC proceeds to step 770. The MBMS DEDICATED NOTIFICATION message includes a MBMS service ID and transmission mode information (indicating "Not Provide"). By omitting step 750, when the MBMS service cannot be provided, the SRNC docs not notify the UE that MBMS data transmission has been started.

When an MBMS CHANNEL TYPE RECONFIGURATION INDICATION message is not received in step 710, the SRNC proceeds to step 760. This is the case where the SRNC has performed the MBMS attach process with the DRNC, but has not received an MBMS CHANNEL TYPE RECONFIGURATION INDICATION message. In this case, the SRNC implicitly determines that the cell's transmission mode is PTM. In step 760, the SRNC sends, through the DCCH, a MBMS DEDICATED NOTIFICATION message to notify the UE that MBMS data transmission has been started in the PTM transmission mode. The MBMS DEDICATED NOTIFICATION message includes a MBMS service ID and transmission mode information (indicating PTM).

As is apparent from the above description, the present invention determines a transmission mode for transmitting multimedia broadcast/multicast service (MBMS) data in a drift radio network controller (DRNC), and sends information of the determined transmission mode to a serving radio network controller (SRNC). The SRNC receives, from the DRNC, the information of the transmission mode determined cell by cell, and determines the transmission mode for a user equipment (UE). The SRNC suitably pages the UE according to the transmission mode for the UE determined cell by cell. As a result, the present invention effectively provides an MBMS service by efficiently using limited radio resources.

Although certain embodiments of the present invention have been described for illustrative purposes, those skilled in the art will appreciate that various modifications, additions and substitutions are possible, without departing from the scope and spirit of the invention as disclosed in the accompanying claims, including the full scope of equivalents thereof.

## Claims

1. A method for providing a multimedia broadcast/multicast service (MBMS) in a mobile communication system including a serving radio network controller (SRNC) for providing the MBMS to one or more user equipments (UEs) located in a plurality of cells, and a drift radio network controller (DRNC) for covering the cells, comprising:
determining an MBMS channel type or whether the MBMS service is supported cell by cell in the DRNC; and
sending, to the SRNC, a message comprising transmission mode information indicative of the determined MBMS channel type or information whether the MBMS service is supported.

2. The method according to claim 1, wherein the transmission mode information indicates if the channel type is point-to-point (PTP) or point-to-multipoint (PTM), or "Not Provide" indicating that the MBMS is unable to be provided.

3. The method according to claim 1, wherein the transmission mode information indicates if the channel type is point-to-point (PTP), or "Not Provide" indicating that the MBMS is unable to be provided.

4. The method according to claim 3, wherein when the message is not received, the SRNC implicitly determines that the channel type of a corresponding cell is point-to-multipoint (PTM).

5. The method according to claim 1, wherein the transmission mode information indicates if the channel type is point-to-point (PTP) or point-to-multipoint (PTM).

6. The method according to claim 5, wherein when the message is not received, the SRNC implicitly determines that a corresponding cell cannot provide the MBMS.

7. The method according to claim 1, further comprising:
identifying transmission modes of the plurality of cells as point-to-point (PTP), point-to-multipoint (PTM), or "Not Provide" indicating that the MBMS is unable to be provided, according to the transmission mode information included in the message, and determining the transmission mode for the MBMS UE by UE, in the SRNC.

8. The method according to claim 7, further comprising:
sending, from the SRNC, an MBMS DEDICATED NOTIFICATION message for notifying a corresponding UE of the determined transmission mode through a dedicated control channel (DCCH).

9. The method according to claim 1, wherein the DRNC takes into account radio resources and the number of UEs, joining the MBMS, located in each cell, and determines the transmission mode cell by cell.

10. The method according to claim 1, wherein the message is an MBMS CHANNEL TYPE RECONFIGURATION INDICATION message on an Iur interface.

11. The method according to claim 10, wherein the message includes an MBMS service identifier (ID) and a cell ID.

12. The method according to claim 1, wherein the message is sent through a signaling bearer established for the MBMS between the SRNC and the DRNC.

13. The method according to claim 12, wherein the signaling bearer is a connectionless signaling bearer.

14. The method according to claim 12, wherein the signaling bearer is a dedicated connection oriented signaling bearer established for the MBMS.

15. The method according to claim 12, wherein the signaling bearer is a connection oriented signaling bearer established for all MBMS services including the MBMS.

16. An apparatus for providing a multimedia broadcast/multicast service (MBMS) in a mobile communication system, comprising:
a serving radio network controller (SRNC) for providing the MBMS to one or more user equipments (UEs) located in a plurality of cells; and
a drift radio network controller (DRNC) for determining an MBMS channel type or whether the MBMS service is supported cell by cell, and sending, to the SRNC, a message including transmission mode information indicative of the determined MBMS channel type or information whether the MBMS service is supported.

17. The apparatus according to claim 16, wherein the transmission mode information indicates if the channel type is point-to-point (PTP) or point-to-multipoint (PTM), or "Not Provide" indicating that the MBMS is unable to be provided.

18. The apparatus according to claim 16, wherein the transmission mode information indicates if the channel type is point-to-point (PTP), or "Not Provide" indicating that the MBMS is unable to be provided.

19. The apparatus according to claim 18, wherein when the message is not received, the SRNC implicitly determines that the channel type of a corresponding cell is point-to-multipoint (PTM).

20. The apparatus according to claim 16, wherein the transmission mode information indicates if the channel type is point-to-point (PTP) or point-to-multipoint (PTM).

21. The apparatus according to claim 20, wherein when the message is not received, the SRNC implicitly determines that a corresponding cell cannot provide the MBMS.

22. The apparatus according to claim 16, wherein the SRNC identifies transmission modes of the plurality of cells as point-to-point (PTP), point-to-multipoint (PTM), or "Not Provide" indicating that the MBMS is unable to be provided, according to the transmission mode information included in the message, and determining the transmission mode for the MBMS UE by UE.

23. The apparatus according to claim 22, wherein the SRNC sends an MBMS DEDICATED NOTIFICATION message for notifying a corresponding UE of the determined transmission mode through a dedicated control channel (DCCH).

24. The apparatus according to claim 16, wherein the DRNC takes into account radio resources and the number of UEs, joining the MBMS, located in each cell, and determines the transmission mode cell by cell.

25. The apparatus according to claim 16, wherein the message is an MBMS CHANNEL TYPE RECONFIGURATION INDICATION message on an lur interface.

26. The apparatus according to claim 25, wherein the message includes an MBMS service identifier (ID) and a cell ID.

27. The apparatus according to claim 16, wherein the message is sent through a signaling bearer established for the MBMS between the SRNC and the DRNC.

28. The apparatus according to claim 27, wherein the signaling bearer is a connectionless signaling bearer.

29. The apparatus according to claim 27, wherein the signaling bearer is a dedicated connection oriented signaling bearer established for the MBMS.

30. The apparatus according to claim 27, wherein the signaling bearer is a connection oriented signaling bearer established for all MBMS services including the MBMS.
